# EUROPÄISCHE PATENTSCHRIFT

(11) **EP 3 524 531 B1**
(45) Veröffentlichungstag und Bekanntmachung des Hinweises auf die Patenterteilung: **08.07.2020**
(21) Anmeldenummer: 19163875.8
(22) Anmeldetag: 08.11.2012
(51) Int. Cl.: B65D 1/24, B29C 45/00, B29L 31/00, B29C 45/37, B29C 33/42, B29C 63/02

(54) **VERFAHREN ZUM HERSTELLEN VON GETRÄNKEKISTEN AUS KUNSTSTOFF**
METHOD FOR MANUFACTURING BEVERAGE CRATES FROM PLASTIC
PROCÉDÉ DE FABRICATION DE CAISSES DE BOISSONS EN MATIÈRE PLASTIQUE

(30) Priorität: 08.11.2011 DE 102011117827
(43) Veröffentlichungstag der Anmeldung: 14.08.2019
(62) Teilanmeldung aus: 12790415.9
(73) Patentinhaber: Störtebeker Braumanufaktur GmbH, 18439 Stralsund (DE)
(72) Erfinder: Nordmann, Jürgen, 18573 Rambin (DE); Triebe, Karsten, 18573 Rambin (DE)
(74) Vertreter: Hauck Patentanwaltspartnerschaft mbB

(56) Entgegenhaltungen:
- EP-A1- 1 008 527
- EP-A1- 2 143 647

## Beschreibung

Die Erfindung bezieht sich auf ein Verfahren zum Herstellen von Getränkekisten aus Kunststoff.

Getränkekisten dienen dem Transport einer Vielzahl von Getränkeflaschen. Bekannt sind z.B. Getränkekisten für 20x0,51-Bierflaschen oder für 24x0,331-Bierflaschen. Früher wurden Getränkekisten aus Holz hergestellt. Heute bestehen Getränkekisten in der Regel aus Kunststoff. Getränkekisten werden meistens für Mehrwegflaschen eingesetzt. Der Verbraucher entrichtet beim Erwerb einer Getränkekiste Pfand für die Mehrwegflaschen und für die Getränkekisten.

Getränkekisten haben einen rechteckigen Boden und von den Rändern des Bodens hochstehende Seitenwände. Die Seitenwände können mehr oder weniger geschlossen sein. Sie sind mit Tragöffnungen zum Ergreifen und Tragen der Getränkekisten versehen. Die Seitenwände können auch rahmenartig ausgebildet sein, mit vertikal hochstehenden Pfosten und horizontalen Rahmenteilen. Zum Tragen können die horizontalen Rahmenteile gegriffen werden.

Vom Boden bekannter Getränkekisten stehen vertikale Trennwände hoch, die Gefache für das Einsetzen von Flaschen abgrenzen. Ferner sind Getränkekisten bekannt, bei denen vom Boden Pinolen hochstehen, um Flaschenstellplätze voneinander zu trennen. Des Weiteren gibt es Flaschenkisten, bei denen vom Boden Pinolen und Trennwände vorstehen. Ferner sind Flaschenkisten bekannt, die vom Boden hochstehende Pinolen und Halbpinolen aufweisen und Vorsprünge, die höchstens die Höhe von Stützschwellen erreichen. Flaschenkisten mit Pinolen sind insbesondere zum Einsetzen von Flaschen in Multipacks aus Karton geeignet, die mehrere Flaschen aufnehmen.

Zum Bilden standsicherer Stapel aus Flaschenkästen weisen diese meistens einen von der Unterseite vorstehenden Sockel auf, der in die Öffnung zwischen den Seitenwänden an der Oberseite einer weiteren Flaschenkiste einsetzbar ist, wobei sich die seitlich des Sockels vorstehenden Randbereiche des Bodens auf dem oberen Rand der unteren Flaschenkiste abstützen.

Flaschenkisten werden mit Aufdrucken versehen, die z.B. den Hersteller, die Marke bzw. andere Angaben betreffen.

Bereits bekannt ist, einen Aufdruck auf eine Getränkekiste mittels eines In-Mould-Labels aufzubringen. Hierbei handelt es sich um eine Folie, die mit der Marke bedruckt ist und in einer Ausnehmung mit glatter Oberfläche eines Spritzgießwerkzeugs mit dem Material der Getränkekiste hinterspritzt wird. Auf diese Weise wird eine qualitativ hochwertige Wiedergabe der Marke erreicht.

Die DE 20 2009 015 066 U1 beschreibt einen Flaschenkasten, der an einer Seitenwand eine Ausnehmung aufweist, in der ein Inmould-Label aufgenommen und fest mit der Seitenwand des Kastens verbunden ist. Die Folie ist an ihrer freiliegenden Außenseite vollflächig mit einer Überdruckschicht aus transparentem Kunststoff überzogen, wobei der Kunststoffüberzug die in den Kunststoff der Kastenseitenwand eingebettete Folie vollständig übergreift, um die Folie mit ihrer bedruckten oder mit einem Dekor versehenen Sichtfläche wirkungsvoll gegen Schädigungen zu schützen.

Die DE 10 2005 036 258 A1 beschreibt eine Dekorfolie und ein Verfahren zu ihrer Herstellung sowie einen Getränkekasten aus Kunststoff, der die Dekorfolie aufweist.

Die EP 2 143 647 A1 beschreibt einen Getränkekasten, bei dem auf einem Bereich der Seitenwand eine Inmould-Folie angeordnet ist, die ein Relief mit zumindest einer Erhöhung und/oder zumindest einer Vertiefung aufweist. Die Erhöhungen und Vertiefungen nehmen verschiedene diskrete Ebenen ein. Ferner weist das Relief abgerundete, eckige oder sonstige Geometrien auf. Durch das Relief soll der Herstellername, ein Symbol oder Informationen auf einer oder mehreren Seitenwänden der Getränkekiste gebildet werden.

Ferner ist eine Getränkekiste aus Kunststoff bekannt, die die Optik einer Getränkekiste aus Holz aufweist. Die bekannte Getränkekiste hat einen durchbrochenen Rahmen aus horizontalen Brettern und vertikalen Pfosten, der die Oberflächenstruktur von Holz aufweist. Die Getränkekiste ist im Siebdruckverfahren bedruckt und weist das Erscheinungsbild von hellem, frischem Holz auf. Herstellungsbedingt ist die Qualität der Holzoptik der Getränkekiste nur mäßig.

Davon ausgehend liegt der Erfindung die Aufgabe zugrunde, ein Verfahren zum Herstellen von Getränkekisten aus Kunststoff zur Verfügung zu stellen, mit dem Getränkekisten mit verbesserter Qualität die Anmutung und Haptik von Getränkekisten aus einem anderen Material als Kunststoff verliehen werden kann.

Die Aufgabe wird durch ein Verfahren mit den Merkmalen des Anspruches 1 gelöst. Vorteilhafte Ausgestaltungen des Verfahrens sind in Unteransprüchen angegeben.

Bei dem erfindungsgemäßen Verfahren zum Herstellen von Getränkekisten aus Kunststoff mit der Anmutung einer Getränkekiste aus einem anderen Material als Kunststoff werden
- Grundkörper der Getränkekiste spritzgegossen, wobei das Spritzgießwerkzeug so beschaffen ist, dass es die Außenseiten der Seitenwände flächendeckend mit einer charakteristischen Oberflächenstruktur von Holz, Geflecht, Textil oder Mauerwerk versieht, dessen Anmutung die Getränkekisten aufweisen sollen, und
- auf die strukturierten Außenseiten der Seitenwände der Grundkörper flächendeckend Folien mit einem fotorealistischen Bild von Holz, Geflecht, Textil oder Mauerwerk mit derselben charakteristischen Oberflächenstruktur auf die Oberflächenstruktur der Getränkekiste ausgerichtet flächig anliegend aufgebracht und mit den Außenseiten der Grundkörper verbunden.

Bei dem erfindungsgemäßen Verfahren wird in qualitativ besonders hochwertiger Weise erreicht, dass die Getränkekiste die Anmutung und Haptik einer Getränkekiste aus einem anderen Material als Kunststoff erhält. Hierfür werden nämlich die Getränkekisten nicht nur auf den Außenseiten der Seitenwände flächendeckend mit einer charakteristischen Oberflächenstruktur des Materials versehen, dessen Anmutung die Getränkekisten aufweisen sollen. Zusätzlich werden auf die strukturierten Außenseiten der Grundkörper flächendeckend Folien flächig aufliegend aufgebracht und mit diesen verbunden, die ein fotorealistisches Bild des Materials mit derselben Oberflächenstruktur aufweisen. Beim Aufbringen der Folien wird das fotorealistische Bild des Materials mit der Oberflächenstruktur passgenau auf die beim Spritzgießen erzeugte, entsprechende Oberflächenstruktur der Seitenwände ausgerichtet. Durch die Überlagerung der Oberflächenstruktur und des fotorealistischen Bildes derselben Oberflächenstruktur wird den Getränkekisten eine qualitativ sehr hochwertige bzw. täuschend echte Anmutung und Haptik einer Getränkekiste aus dem anderen Material als Kunststoff verliehen. Das erfindungsgemäße Verfahren bringt Getränkekisten hervor, bei denen die Außenseiten der Seitenwände dreidimensional entsprechend der Oberflächenstruktur des Materials gestaltet sind, dessen Anmutung die Getränkekiste aufweisen soll. In Kombination mit dem der Oberflächenstruktur überlagerten photorealistischen Bild derselben Oberflächenstruktur führt dies zu einem Erscheinungsbild der Getränkekiste, die dem Erscheinungsbild des originalen Materials täuschend ähnelt, dessen Anmutung die Getränkekiste aufweisen soll. Auch die Haptik der Getränkekiste ist gegenüber der Haptik herkömmlicher Getränkekisten mit glatten Außenseiten stark verbessert und kommt der Haptik einer Getränkekiste aus dem originalen Material sehr nahe. Mit dem erfindungsgemäßen Verfahren können insbesondere Getränkekisten aus Kunststoff hergestellt werden, die in täuschend echter Weise die Anmutung einer Getränkekiste aus Holz aufweisen.

Die charakteristische Oberflächenstruktur ist eine Oberflächenstruktur, an der man ein bestimmtes Material gut erkennen kann. Falls das Material verschiedene Oberflächenstrukturen haben kann, ist die charakteristische Oberflächenstruktur eine typische Oberflächenstruktur die es ermöglicht, das Material zu erkennen. Das fotorealistische Bild ist vorzugsweise eine Fotografie oder eine Computergrafik.

Das Aufbringen der Folie auf die Außenseite, so dass sie flächig auf der Oberflächenstruktur aufliegt, erfolgt gemäß einer Ausgestaltung durch Aufpressen. Gemäß einer weiteren Ausgestaltung erfolgt es unter Anlegen eines Vakuums. Das Verbinden der Folie mit der Außenseite erfolgt gemäß einer weiteren Ausgestaltung durch Verschweißen. Vorzugsweise werden die Folien thermisch mit den Außenseiten verschweißt. Alternativ werden sie angeklebt.

Gemäß einer Ausgestaltung des Verfahrens weisen die auf dem Grundkörper aufgebrachten Folien eine das Bild tragende Grundfolie und eine das Bild überdeckende Schutzfolie auf. Die Schutzfolie wird nach dem Bedrucken der Grundfolie aufgebracht. Sie verhindert, dass bei Benutzung die Qualität des Bildes beeinträchtigt wird. Sie sichert die hohe Qualität des äußeren Erscheinungsbildes der Getränkekiste.

Gemäß einer weiteren Ausgestaltung werden die Folien bzw. Grundfolien im Rotationstiefdruckverfahren bedruckt. Hierdurch wird eine sehr hohe Bildqualität erreicht.

Gemäß einer weiteren Ausgestaltung werden nach dem erfindungsgemäßen Verfahren Getränkekisten mit der Optik bzw. Haptik einer Holzkiste oder einer Metallkiste oder eine gemauerten Kiste oder eine Kiste aus Geflecht oder einer Kiste aus Textil hergestellt. Bevorzugt werden nach dem Verfahren Getränkekisten mit der Anmutung bzw. Haptik einer Getränkekiste aus einem natürlichen Material (z.B. Holz) hergestellt.

Gemäß einer weiteren Ausgestaltung sind die Außenseiten der Seitenwände vollflächig oder nahezu vollflächig mit der charakteristischen Oberflächenstruktur des Materials versehen, dessen Anmutung die Getränkekisten aufweisen sollen, und sind auf die Außenseiten der Seitenwände vollflächig oder nahezu vollflächig Folien mit dem photorealistischen Bild des Materials mit derselben charakteristischen Oberflächenstruktur aufgebracht. Unter nahezu vollflächig wird vorzugsweise mindestens 90%, weiterhin vorzugsweise mindestens 95% der Fläche der Seitenwände verstanden.

Gemäß einer weiteren Ausgestaltung wird auf mindestens einer Seitenwand auf die Außenseite einer Folie mindestens ein Etikett angebracht. Das Etikett ist beispielsweise ein Etikett aus Kunststoff und/oder aus Papier. Durch die Anbringung des Etiketts auf die Außenseite der Folie wird die dreidimensionale Gestaltung der Oberfläche und die Annäherung an eine Getränkekiste aus dem originalen Material weiter verbessert. Das Etikett wird beispielsweise durch Aufkleben und/oder durch Aufsiegeln auf der Außenseite der Folie angebracht.

Ferner bezieht die Erfindung Verfahren ein, bei denen die Innenseiten der Seitenwände der Grundkörper mit der charakteristischen Oberflächenstruktur des Materials versehen werden, dessen Anmutung die Getränkekisten aufweisen sollen, und bei denen auf die Innenseiten der Seitenwände Folien mit einem photorealistischen Bild des Materials mit derselben charakteristischen Oberflächenstruktur auf die Oberflächenstruktur der Getränkekisten ausgerichtet flächig aufliegend aufgebracht und mit den Innenseiten der Grundkörper verbunden werden. Bei dieser Ausgestaltung des Verfahrens haben die Getränkekisten an den Außenseiten und den Innenseiten die Anmutung und Haptik der Getränkekiste aus dem originalen Material. Diese Ausgestaltung ist besonders vorteilhaft für Getränkekisten, die innen kein Gefache haben, sondern nur von der Bodenwand hochstehende Pinolen und/oder Vorsprünge und/oder Trennwände und/oder Vertiefungen in der Bodenwand. Bei diesen Getränkekisten können die Innenseiten der Trennwände ohne Beeinträchtigung vollflächig oder nahezu vollflächig mit Folien bedeckt werden.

Die Erfindung wird nachfolgend anhand der anliegenden Zeichnungen eines Ausführungsbeispieles näher erläutert. In den Zeichnungen zeigen:
- Fig. 1: eine Getränkekiste in einer Perspektivansicht schräg von oben und von der Seite;
- Fig. 2: einen horizontalen Teilschnitt durch eine Seitenwand der Getränkekiste.

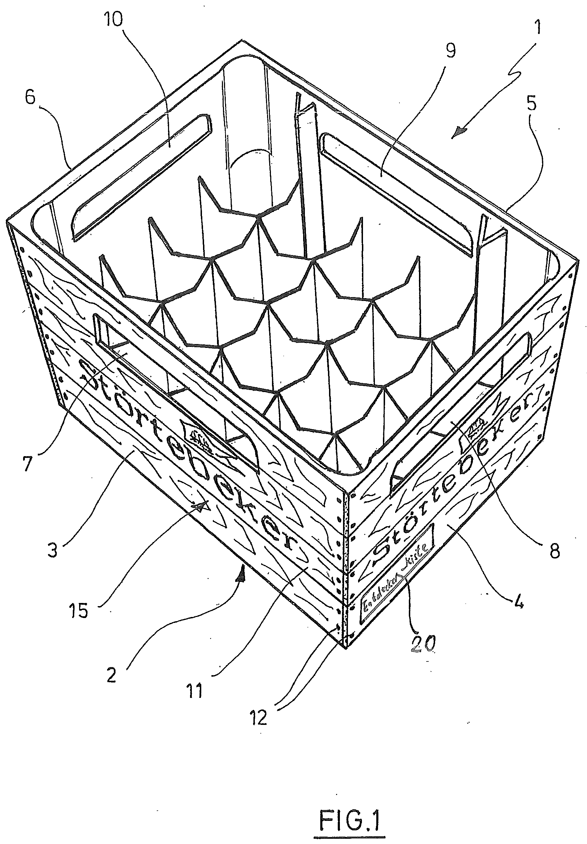

Gemäß Fig. 1 weist eine Getränkekiste 1 mindestens eine Bodenwand 2 und vier von den Rändern der Bodenwand 2 hochstehende Seitenwände 3, 4, 5, 6 auf. Unterhalb der oberen Ränder sind in den Seitenwänden 3, 4, 5, 6 Grifföffnungen 7, 8, 9, 10 vorhanden.

Die Seitenwände 3 bis 6 haben das Aussehen einer Wand aus Holzbrettern 11. In den Randbereichen weist die Oberflächenstruktur die Struktur von Nägeln 12 oder anderen Befestigungsmitteln wie Holzzapfen auf.

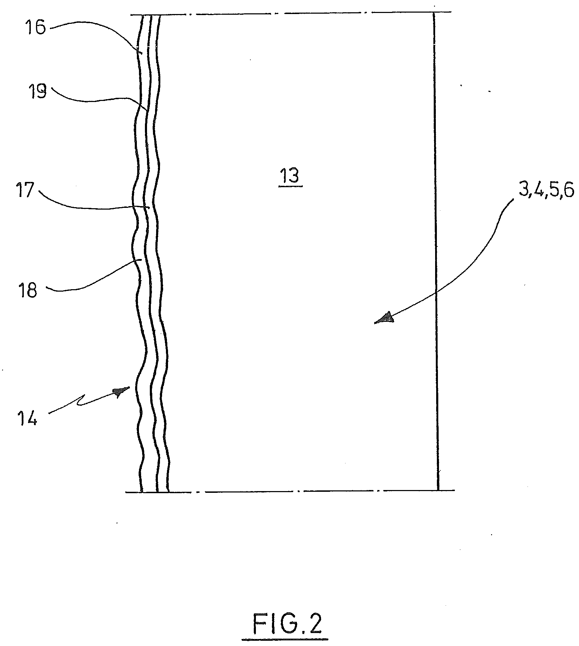

Gemäß Fig. 2 wird die Anmutung einer Holzkiste dadurch erreicht, dass ein Grundkörper 13 der Getränkekiste 1 auf der Außenseite 14 eine entsprechend der Holzbretterkonstruktion strukturierte Oberflächenstruktur 15 aufweist. Die Oberflächenstruktur 15 wird beim Spritzgießen des Grundkörpers 13 mittels geeignet geformter Spritzgießwerkzeuge erzeugt.

Des Weiteren werden auf den Außenseiten Folien 16 angebracht, die eine Grundfolie 17 und eine Schutzfolie 18 umfassen. Die von der Schutzfolie 18 überdeckte Seite der Grundfolie 17 trägt das Bild 19 der Holzbretterkonstruktion, deren Oberflächenstruktur 15 auf den Außenseiten des Grundkörpers 13 vorhanden ist. Die Folien sind mit dem Bild 19 passgenau auf die Oberflächenstruktur 15 ausgerichtet und durch Aufpressen und/oder unter Vakuum und durch Verschweißen flächig mit dem Grundkörper 13 verbunden.

Auf die Seitenwand 4 ist ein Etikett 20 mit Angaben zum Getränkeerzeugnis aufgeklebt oder aufgesiegelt.

Die Getränkekiste 1 hat somit das täuschende Erscheinungsbild und die Haptik einer Getränkekiste mit Seitenwänden aus Holzbrettern. Die Qualität der Fotografien wird durch die Schutzfolie 18 gesichert.

## Patentansprüche

1. Verfahren zum Herstellen von Getränkekisten aus Kunststoff mit der Anmutung einer Getränkekiste (1) aus einem anderen Material als Kunststoff, bei dem
- die Grundkörper (13) der Getränkekiste (1) spritzgegossen werden, wobei das Spritzgießwerkzeug so beschaffen ist, dass es die Außenseiten (14) der Seitenwände (3 bis 6) flächendeckend mit einer charakteristischen Oberflächenstruktur von Holz, Geflecht, Textil oder Mauerwerk versieht, dessen Anmutung die Getränkekiste aufweisen soll, und
- bei dem auf die strukturierten Außenseiten (14) der Seitenwände (3 bis 6) der Grundkörper (13) flächendeckend Folien (16) mit einem fotorealistischen Bild (19) von Holz, Geflecht, Textil oder Mauerwerk mit derselben charakteristischen (20) Oberflächenstruktur auf die Oberflächenstruktur (15) der Seitenwände (3 bis 6) ausgerichtet flächig anliegend aufgebracht und mit den Außenseiten (14) der Grundkörper (13) verbunden werden.

2. Verfahren nach Anspruch 1, bei dem die Folien (16) durch Aufpressen auf die Außenseiten (14) und/oder durch Anlegen eines Vakuums eng anliegend auf die Außenseiten (14) aufgebracht werden.

3. Verfahren nach Anspruch 1 oder 2, bei dem die Folien (16) durch Verschweißen mit dem Grundkörper (13) verbunden werden.

4. Verfahren nach einem der Ansprüche 1 bis 3, bei dem die Folien (16) eine das Bild tragende Grundfolie (17) und eine das Bild überdeckende Schutzfolie (18) umfassen.

5. Verfahren nach einem der Ansprüche 1 bis 4, bei dem die Folien (16) im Rotationstiefdruckverfahren bedruckt werden.

## Claims

1. A method for manufacturing beverage crates from plastic with the appearance of a beverage crate (1) consisting of a different material than plastic, wherein:
- the main body (13) of the beverage crate (1) is injection molded, wherein the injection mold is of such a kind that it provides the entire surface of the outer sides (14) of the sidewalls (3 to 6) with a characteristic surface structure of wood, meshwork, textile or masonry, the appearance of which the beverage crate is supposed to have, and
- wherein films (16) with a photo realistic picture (19) of wood, meshwork, textile or masonry with the same characteristic (20) surface structure are applied to the entire structured outer sides (14) of the sidewalls (3 to 6) of the main bodies (13) with a flat, adjacent orientation to the surface structure (15) of the sidewalls (3 to 6), and bonded to the outer sides (14) of the main bodies (13).

2. The method according to claim 1, wherein the films (16) are applied by being pressed onto the outer sides (14), and/or are applied very snugly to the outer sides (14) by applying a vacuum.

3. The method according to claim 1 or 2, wherein the films (16) are bonded to the main body (13) by being welded.

4. The method according to one of claims 1 to 3, wherein the films (16) comprise a base film (17) bearing the picture and a protective film (18) covering the picture.

5. The method according to one of claims 1 to 4, wherein the films (16) are printed in a rotogravure method.

## Revendications

1. Procédé de fabrication de caisses de boissons en matière plastique présentant l'aspect d'une caisse de boissons (1) en une autre matière que le plastique, dans lequel
• les corps de base (13) de la caisse de boissons (1) sont moulés par injection, l'outil de moulage par injection étant conçu de manière à recouvrir les côtés extérieurs (14) des parois latérales (3 à 6) de manière surfacique avec une structure de surface caractéristique en bois, en treillis, en tissu ou en maçonnerie, dont l'aspect doit présenter la caisse de boissons, et
• dans lequel des feuilles (16) avec une image de qualité photographique (19) de bois, de treillis, de tissu ou de maçonnerie avec la même structure de surface caractéristique (20) sont disposées de manière surfacique sur les côtés extérieurs structurés (14) des parois latérales (3 à 6) des corps de base (13), en étant appliquées à plat et orientées vers la structure de surface (15) des parois latérales (3 à 6), et sont reliées aux côtés extérieurs (14) des corps de base (13).

2. Procédé selon la revendication 1, dans lequel les feuilles (16) sont disposées sur les côtés extérieurs (14) par pression et/ou appliquées étroitement sur les côtés extérieurs (14) par application d'un vide.

3. Procédé selon la revendication 1 ou 2, dans lequel les feuilles (16) sont reliées au corps de base (13) par soudage.

4. Procédé selon l'une des revendications 1 à 3, dans lequel les feuilles (16) comportent une feuille de base (17) portant l'image et une feuille de protection (18) recouvrant l'image.

5. Procédé selon l'une des revendications 1 à 4, dans lequel les feuilles (16) sont imprimées à l'aide d'un procédé d'héliogravure.
